# EUROPEAN PATENT SPECIFICATION

(11) **EP 2 472 776 B1**
(45) Date of publication and mention of the grant of the patent: **14.12.2016**
(21) Application number: 10811249.1
(22) Date of filing: 23.08.2010
(51) Int. Cl.: H04L 12/18

(54) **METHOD AND DEVICE FOR DELIVERING AND RECEIVING PUSH MESSAGES**
VERFAHREN UND VORRICHTUNG ZUM SENDEN UND EMPFANGEN VON PUSH-NACHRICHTEN
PROCÉDÉ ET DISPOSITIF POUR DISTRIBUER ET RECEVOIR DES MESSAGES DIRECTS

(30) Priority: 24.08.2009 CN 200910163085
(43) Date of publication of application: 04.07.2012
(73) Proprietor: Huawei Device Co., Ltd., Longgang District Shenzhen Guangdong 518129 (CN)
(72) Inventor: FAN, Shunan, Shenzhen Guangdong 518129 (CN); YANG, Jian, Shenzhen Guangdong 518129 (CN); WANG, Lei, Shenzhen Guangdong 518129 (CN)
(74) Representative: Isarpatent
(86) International application number: PCT/CN2010/076251
(87) International publication number: WO 2011/023089

(56) References cited:
- EP-A1- 1 841 130
- WO-A2-03/043286
- WO-A2-03/094534
- CN-A- 1 845 550
- CN-A- 101 355 488
- US-A1- 2003 095 540

## Description

### FIELD OF THE INVENTION

The present invention relates to the field of communications technologies, and in particular, to a method and a device for delivering and receiving a Push message.

### BACKGROUND OF THE INVENTION

Push (push) is a content distribution mechanism, and works in a client/server mode. A Push Initiator (Push Initiator , PI) pushes information and a delivery instruction to a Push server without being requested by a client, and then the Push server sends the Push content to a terminal according to the delivery instruction. The Push server obtains a message from the PI through a Push Access Protocol (Push Access Protocol, PAP), and then sends the content to the terminal through a Push Over The Air (Over The Air , OTA) protocol.

The Push message may be sent in a point-to-point or point-to-multipoint mode. In the process of sending a Push message in a point-to-point mode, the terminal may return an Acknowledge (ACK) message to the Push server as an indication of having received the Push message. The Push server returns a delivery report to the PI according to the ACK message. If the Push message is directed to multiple terminals, if the message is still sent in a point-to-point mode, the Push server needs to send the same Push message repeatedly, resulting in the increase of the load on the bearer network. Therefore, the point-to-multipoint mode is preferred for sending a Push message to multiple terminals.

The prior art has the following disadvantages: in the process of sending a Push message in a point-to-multipoint mode, if the Push server delivers the Push message in a broadcast mode or a multicast mode, because the destination terminals are not known before delivery of the Push message, or because the terminals have no uplink channel available for returning a receiving response, the Push server cannot know the delivery state of the Push message. WO 03/043286 A2 discloses a messaging system. The messaging system brokers messages between publisher application (i.e. content providers) and wireless client devices (i.e. content subscribers), receives and distribute messages to subscribers having subscribed to particular content.

WO 03/094 534 A2 discloses a method to improve the efficiency of multimedia message services with respect to the delivery and/or reports of multimedia messages.

### SUMMARY OF THE INVENTION

The embodiments of the present invention provide a method and a device for delivering and receiving a Push message, so that the Push server knows the delivery state of the Push message when delivering the Push message in a broadcast mode or a multicast mode.

A method for delivering a Push message according to an embodiment of the present invention includes:
receiving, by a push server, a Push message from a Push Initiator, PI, in which the Push message carries an indication of making statistics on a delivery result;
determining, by the push server, to deliver the Push message to terminals in a broadcast mode or a multicast mode according to the Push message; and
obtaining, by the push server, a delivery report carrying a statistical delivery result by receiving receiving responses returned by the terminals and obtaining a statistical delivery result according to the received receiving responses, or by querying a number of connections set up between the terminals and the server, so as to know delivery state of the Push message;
wherein if the terminals have no uplink channel available for returning the receiving response, the method further comprises:
adding, by the push server, an indication of a bearer mode into the Push message delivered to the terminals, so that the terminal activates a corresponding application according to the indication of the bearer mode and returns a receiving response in the indicated bearer mode.

Corresponding to the method described above, an embodiment of the present invention provides a Push server, where the Push server includes:
a receiving unit, configured to receive a Push message from a Push Initiator, PI, in which the Push message carries an indication of making statistics on a delivery result;
a delivery mode determination unit, configured to determine to deliver the Push message to terminals in a broadcast mode or a multicast mode according to the Push message; and
a delivery report obtaining unit, configured to obtain a delivery report carrying a statistical delivery result by receiving receiving responses returned by the terminals and obtaining a statistical delivery result according to the received receiving responses, or by querying a number of connections set up between the terminals and the server, so as to know delivery state of the Push message;
wherein the Push server further comprising:
a bearer mode indication unit, configured to add an indication of a bearer mode into the Push message delivered to the terminals, if the terminals have no uplink channel available for returning the receiving response; wherein the indication of the bearer mode is used to make the terminals activate a corresponding application according to the indication of the bearer mode and return a receiving response in the indicated bearer mode.

### BRIEF DESCRIPTION OF THE DRAWINGS

To make the technical solutions of the present invention clearer, the accompanying drawings for illustrating the embodiments of the present invention are outlined below.
FIG. 1 is a flow chart of a method for delivering a Push message according to an embodiment of the present invention;
FIG. 2 is a flow chart of a method for receiving a Push message according to an embodiment of the present invention;
FIG. 3 is a first functional composition diagram of a Push server according to an embodiment of the present invention;
FIG. 4 is a second functional composition diagram of a Push server according to an embodiment of the present invention;
FIG. 5 is a first functional composition diagram of a terminal according to an embodiment of the present invention;
FIG. 6 is a second functional composition diagram of a terminal according to an embodiment of the present invention;
FIG. 7 is a composition diagram of a system for delivering a Push message according to an embodiment of the present invention; and
FIG. 8 is a specific flow chart of implementing a method embodiment according to the present invention.

### DETAILED DESCRIPTION OF THE EMBODIMENTS

The technical solutions according to the embodiments of the present invention are detailed below with reference to accompanying drawings.

### Embodiment 1

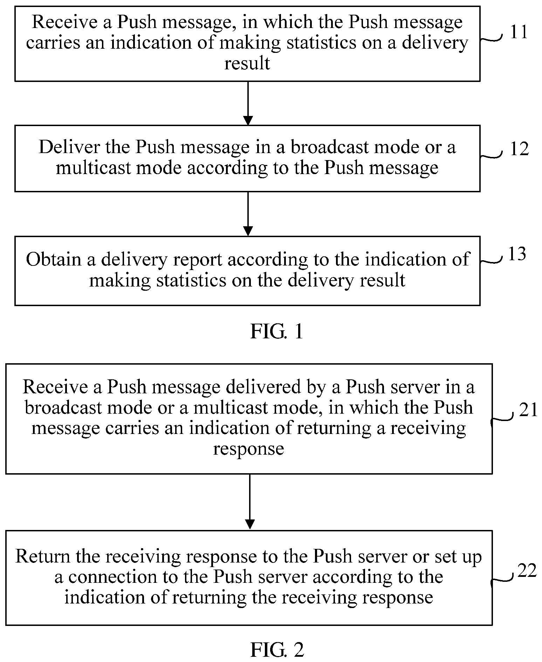

Referring to FIG. 1, a method for delivering a Push message according to the embodiment of the present invention includes:
Step 11: Receive a Push message, in which the Push message carries an indication of making statistics on a delivery result.

The Push server receives the Push message, in which Push message carries an indication of making statistics on a delivery result. The indication of making statistics on the delivery result is carried in the Push message, for example, in a parameter of the Push message. In the following example, the indication is carried in a Quality of Service (QoS) parameter:

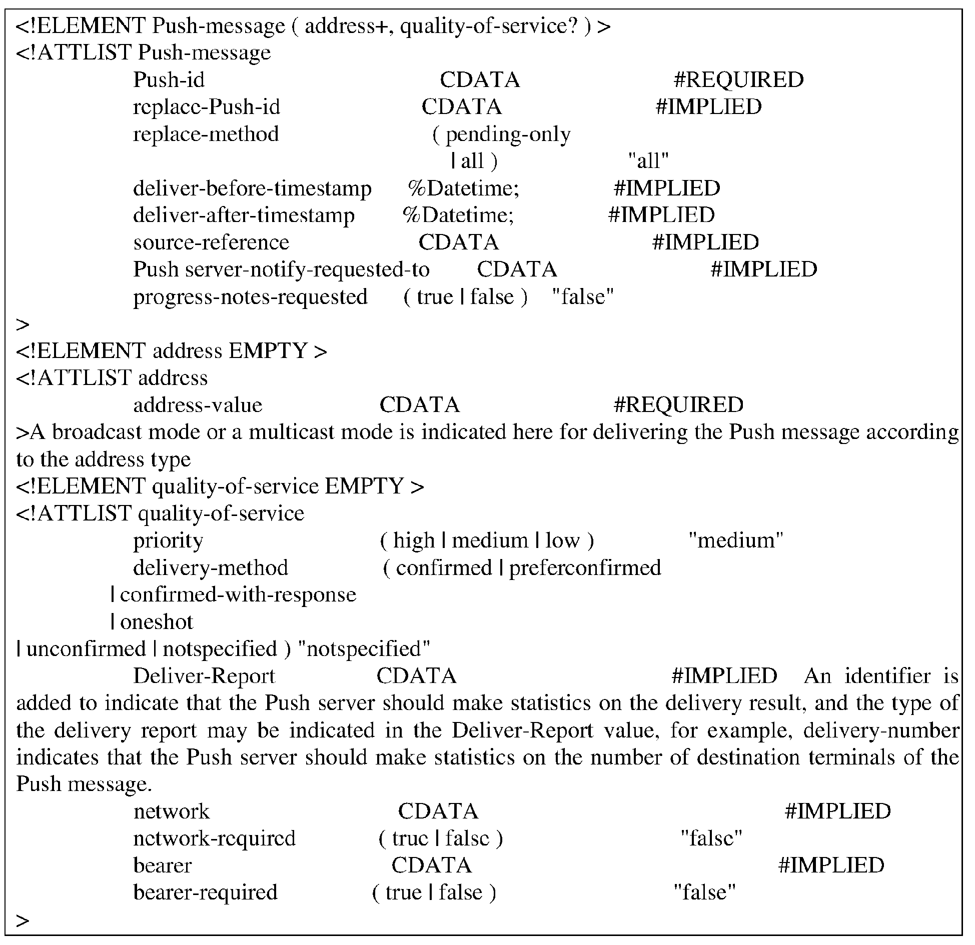

The following gives a possible metadata format of a Delivery-Report:

| **Information Element** | **Type** | **Value** |
|---|---|---|
| Push ID | String | Identifier of a Push message |
| Receiver-Address | String | Broadcast or multicast address type |

The Push server judges the type of the delivery result for statistics according to the Delivery-Report indication information in the Push message.

In this embodiment of the present invention, the Push server may be a Push Proxy Gateway (PPG) in a point-to-multipoint message system. The Push message is sent by the PI to the PPG, and the indication of making statistics on the delivery result may be information for requesting a result notification carried in the Push message sent by the PI to the PPG.

Step 12: Deliver the Push message in a broadcast mode or a multicast mode according to the Push message.

The Push server determines to deliver the Push message in a broadcast mode or a multicast mode according to the Push message. For example, the PI may use the address type in the instruction to instruct the Push server to send the Push message in a broadcast mode or a multicast mode; or the Push server judges whether to send the Push message in a broadcast mode or a multicast mode.

Step 13: Obtain a delivery report according to the indication of making statistics on the delivery result.

The Push server obtains a delivery report according to the indication of making statistics on the delivery result. Specifically, the Push server obtains the delivery reports of all delivery result types, or obtains the delivery reports of only the indicated delivery result type.

The Push server obtains the delivery report by querying a group management server, or by receiving the receiving responses returned by the terminals, or by querying the number of connections between the terminals and the server.

For example, if the PI instructs the Push server to send the Push message in a multicast mode, the Push server may obtain the number of the destination terminals of the Push message by querying the group that includes the destination terminals. When the Push server obtains the delivery report by querying the group management server, the Push server may obtain the address information of the destination terminals before sending the Push message, and obtain the number of destination terminals of the Push message; moreover, the Push server may obtain the number of actually delivered Push messages according to the number of sent Push messages or the number of Push messages sent by the bearer network; and may obtain the number of successfully received Push messages by receiving the receiving responses returned by the terminals or by setting up a connection to the terminal. Nevertheless, the Push server may query the bearer network server to obtain the number of users in the multicast group before sending the Push message; or make statistics on the number of terminals that receive the Push message according to the distributed keys, access parameters, subscription process, service declaration, and the number of messages returned as a confirmation of joining the group.

The terminal judges whether the Push message delivered by the Push server carries an indication of returning a receiving response, and returns a receiving response to the Push server if the Push message carries the indication. The types of the receiving response include: receiving success response, receiving failure response, receiving rejection response, pending response, and re-delivery-disabled response.

The Push server can obtain the delivery report of the Push message through statistics according to the result obtained by querying the group management server, or the receiving responses returned by the terminals, or the connection set up between the server and the terminals. For the same Push message identifier, the statistical number is stored in categories, for example, the number of successfully sent Push messages and the number of unsuccessfully sent Push messages are stored respectively.

The Push server may return a delivery report to the PI proactively or according to a message for requesting a delivery report sent by the PI. The returned delivery reports include delivery reports of all delivery result types and delivery reports of only the requested delivery result type. Alternatively, according to a request message for querying a certain type of delivery report from another server, the Push server may also determine whether to return the requested result to the other server according to the returning policy, and return available query results to the other server if the Push server determines to return the requested result.

If the Push message is delivered to the terminals in a broadcast mode or a multicast mode, and the Push message carries an indication of returning a receiving response, but the terminals have no uplink channel for returning the receiving response, the Push server may add an indication of a bearer mode into the Push message delivered to the terminals, so that the terminals return receiving responses in the indicated bearer mode.

One or more bearer modes may be indicated, and the terminal determines and selects one of the indicated bearer modes for returning a receiving response. The indication information may be carried in the Push message sent to the terminal, for example, in a QoS parameter; or the message header field, value range or message body of the Push message is extended to carry an identifier of the bearer mode used by the terminal for returning the receiving response. The Push message may further specify receiver address information of the receiving response and/or an identifier of the Push message. For example, the Push message indicates that the receiving response should be returned through an SMS, Email, HTTP, WSP, or SIP signaling. The terminal resolves the identifier indicating the bearer mode and activates a corresponding application, and returns a receiving response in the indicated bearer mode. In this way, it is ensured that the terminals return receiving responses even if no uplink channel is available. Here is an example:

| **Information Element** | **Type** | **Value** |
|---|---|---|
| Push ID | String | Identifier of a Push message |
| Receiver-Address | String | Broadcast or multicast address type |
| Sender-Address | String | Address to which the receiving response will be returned |
| Report-Return-Method | String list | Bearer mode used by the terminal, namely, returning the receiving response through an SMS, Email, HTTP, WSP, or SIP signaling |

Nevertheless, if the Push message delivered to the terminals does not indicate the bearer mode, the terminal may return a receiving response in a default mode.

To enhance the statistical function of the Push server, the PI may add an indication of a statistical mode into the Push message, so that the Push server makes statistics on the delivery report in the statistical mode indicated in the Push message. The Push server returns the statistical result to the PI by extending the message header field, value range or message body of the delivery report. In this way, the PI can receive delivery results of detailed types, which helps the user to enjoy better experience.

The statistical result may be carried in the message header of the delivery report. For example, the message header of the delivery report returned by the Push server to the PI carries the following statistical result:

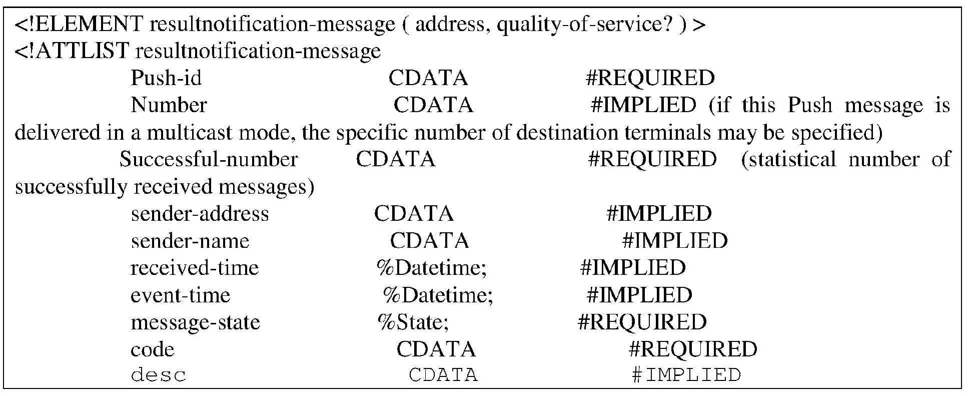

"Number" is the number of terminals to which the Push message is sent, or the number of terminals that return a receiving response. "Successful-Number" is the number of terminals that receive the Push message successfully. Additionally, "Rejected-Number" indicates the number of terminals that reject to receive the Push message; "Pending-Number" indicates the number of terminals that are processing the Push message currently; and "Undeliverable Number" indicates the number of terminals to which the Push message is not delivered.

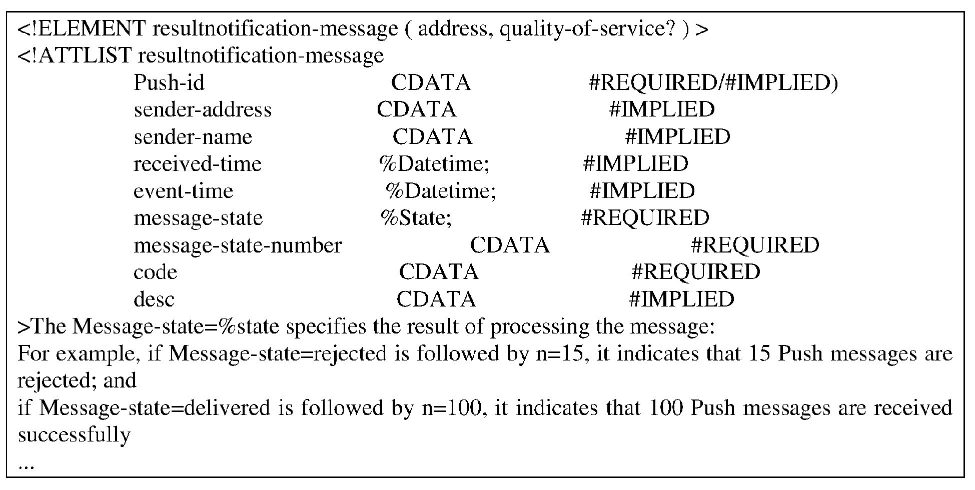

Nevertheless, the Push server may add the statistical result into the message body of the Push message, and return the message in the following mode:

| **Report State** | **Number** | **Address Information** |
|---|---|---|
| Successful-Number | n | Address Info |
| Rejected-Number | n | Address Info |
| Pending-Number | n | Address Info |
| Undeliverable-Number | n | Address Info |
| Delivered-Number | n | Address Info |
| Expired-Number | n | Address Info |
| Aborted-Number | n | Address Info |
| Timeout-Number | n | Address Info |
| Cancelled-Number | n | Address Info |
| Unknown-Number | n | Address Info |
| Total-report-Number | n | Address Info |

Optionally, the PI returns a receiving response to the Push server upon receiving the delivery report.

Additionally, after a terminal receives a Push message that carries an indication of returning a receiving response, if the terminal returns no receiving response or returns a delivery failure response, the Push server may optionally report the address information of the terminal to the PI. According to the address information of the terminal, the PI determines whether to instruct the Push server to re-deliver the Push message to the terminal that does not successfully receive the Push message in a unicast, multicast or broadcast mode, or the Push server itself determines whether to re-deliver the Push message in a unicast, multicast or broadcast mode according to the address information of the terminal, thereby improving the success rate of delivery.

In the method for delivering a Push message according to the embodiment of the present invention, when the Push server delivers a Push message to the terminals in a broadcast mode or a multicast mode, the PI adds an indication of making statistics on the delivery result into the Push message, so that the Push server obtains delivery reports according to the indication, and knows the delivery state of the Push message when delivering the Push message in a broadcast mode or a multicast mode.

### Embodiment 2

Referring to FIG. 2, a method for receiving a Push message according to the embodiment of the present invention includes:
Step 21: Receive a Push message delivered by a Push server in a broadcast mode or a multicast mode, in which the Push message carries an indication of returning a receiving response.

The terminal receives the Push message delivered by the Push server in a broadcast mode or a multicast mode. The Push message carries an indication of returning a receiving response. Specifically, the indication of returning the receiving response may be carried in a QoS parameter of the Push message. For example, a Response-Report identifier is added in the QoS parameter as an indication that the terminal needs to return a receiving response to the Push server.

Step 22: Return a receiving response to the Push server or set up a connection to the Push server according to the indication of returning the receiving response.

The terminal receives the Push message, and judges whether the Push message carries an indication of returning a receiving response, and returns a receiving response to the Push server if the Push message carries the indication. The types of the receiving response include: receiving success response, receiving failure response, receiving rejection response, pending response, and re-delivery-disabled response. The Push server makes statistics on the delivery reports of the Push message according to the receiving responses returned by the terminals, or the connection set up between the server and the terminals, so that the Push server can know the delivery state of the Push message even if the Push message is delivered in a broadcast mode or a multicast mode.

If the Push message is delivered to the terminals in a broadcast mode or a multicast mode, and the Push message carries an indication of returning a receiving response, but the terminals have no uplink channel for returning the receiving response, the Push server may add an indication of a bearer mode into the Push message delivered to the terminals, so that the terminal activates a corresponding application according to the indication of the bearer mode, and returns a receiving response to the Push server in the indicated bearer mode.

One or more bearer modes may be indicated, and the terminal determines and selects one of the indicated bearer modes for returning a receiving response. The indication information may be carried in the Push message sent to the terminal, for example, in a QoS parameter; or the message header field, value range or message body of the Push message is extended to carry an identifier of the bearer mode used by the terminal for returning the receiving response. The Push message may further specify receiver address information of the receiving response and/or an identifier of the Push message. For example, the Push message indicates that the receiving response should be returned through an SMS, Email, HTTP, WSP, or SIP signaling. The terminal resolves the identifier indicating the bearer mode and activates a corresponding application, and returns a receiving response in the indicated bearer mode. In this way, it is ensured that the terminals return receiving responses even if no uplink channel is available. Nevertheless, if the Push message does not indicate the bearer mode, the terminal may return a receiving response in a default mode.

In the method for receiving a Push message according to the embodiment of the present invention, when the Push server delivers a Push message to the terminals in a broadcast mode or a multicast mode, and the Push message carries an indication of returning a receiving response, so that the terminals return receiving responses after receiving the message, and the Push server can make statistics on the delivery reports of the Push message according to the receiving response or the connection set up between the terminals and the server.

### Embodiment 3

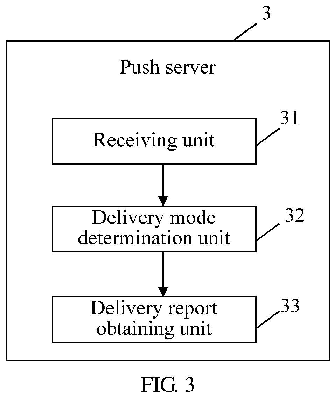

Referring to FIG. 3, a Push server according to the embodiment of the present invention includes:
a receiving unit 31, configured to receive a Push message, in which the Push message carries an indication of making statistics on a delivery result;
a delivery mode determination unit 32, configured to determine to deliver the Push message to terminals in a broadcast mode or a multicast mode according to the Push message; and
a delivery report obtaining unit 33, configured to obtain a delivery report according to the indication of making statistics on the delivery result.

The obtaining the delivery report according to the indication of making statistics on the delivery result includes: obtaining delivery reports of all delivery result types, or obtaining delivery reports of only the indicated delivery result type.

The report obtaining unit 33 includes at least one of the following modules:
a first obtaining module, configured to obtain the delivery report by querying a group management server;
a second obtaining module, adapted to obtain the delivery report by receiving the receiving responses returned by the terminals; and
a third obtaining module, configured to obtain the delivery report by querying the number of connections set up between the terminals and the server.

The Push server may return a delivery report to the PI proactively or according to a message for requesting a delivery report sent by the PI. The returned delivery reports include delivery reports of all delivery result types and delivery reports of only the requested delivery result type. Alternatively, according to a request message for querying a certain type of delivery report from another server, the Push server may also determine whether to return the requested result to the other server according to the returning policy, and return available query results to the other server if the Push serve determines to return the requested result.

In the embodiment of the present invention, the Push server may be a PPG in a point-to-multipoint message system. The Push message received by the PPG is sent by the PI to the PPG.

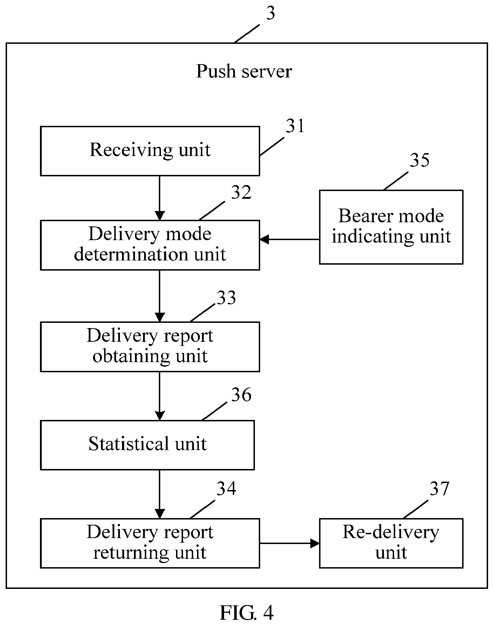

Therefore, referring to FIG. 4, the Push server 3 according to the embodiment of the present invention further includes a delivery report returning unit 34, which at least includes one of the following modules:
a proactive returning module, configured to return the delivery report to the PI proactively;
a request-based returning module, configured to return the delivery report to the PI according to a message for requesting a delivery report sent by the PI; and
a policy-based returning module, configured to determine whether to return the requested delivery report according to a returning policy if a server other than the PI sends a message for requesting the delivery report.

If the Push message is delivered to the terminals in a broadcast mode or a multicast mode, and the Push message carries an indication of returning a receiving response, but the terminals have no uplink channel for returning the receiving response, the Push server further includes:
a bearer mode indication unit 35, configured to add an indication of a bearer mode into the Push message delivered to the terminals, so that the terminal activates the corresponding application according to the indication of the bearer mode and returns a receiving response in the indicated bearer mode. Therefore, it is ensured that the terminals return receiving responses even if no uplink channel is available to the terminal.

To enhance the statistical function of the Push server, the PI may add an indication of a statistical mode of the delivery report into the Push message. Therefore, referring to FIG. 4, the Push server further includes:
a statistical unit 36, configured to make statistics on the delivery reports in the statistical mode indicated in the Push message. In this case, the delivery report returning unit 34 is specifically configured to return the statistical result to the PI by extending the message header field, value range, or message body of the delivery report. In this way, the PI can receive specific types of delivery results, which improves experience of the user.

Moreover, after a terminal receives a Push message that carries an indication of returning a receiving response, if the terminal returns no receiving response or returns a delivery failure response, the Push server may re-deliver the Push message to the terminal according to the address information of the terminal, thereby improving the success rate of delivery. Accordingly, the Push server may further include:
a re-delivery unit 37, configured to re-deliver the Push message to the terminal according to the address information of the terminal if the Push message carries an indication of returning a receiving response but the terminal returns no receiving response or returns a delivery failure response.

The Push server according to the embodiment of the present invention is applicable to the first method embodiment above, so that the Push server can know the delivery state of the Push message even if the Push message is delivered in a broadcast mode or a multicast mode.

### Embodiment 4

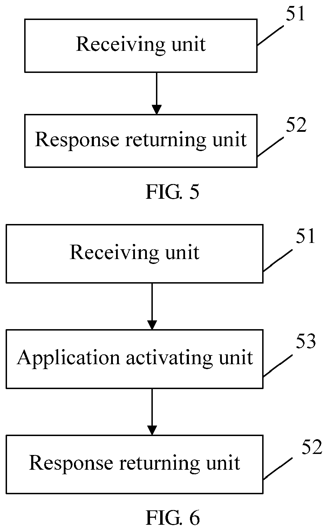

Referring to FIG. 5, a terminal provided according to the embodiment of the present invention includes:
a receiving unit 51, configured to receive a Push message delivered by a Push server in a broadcast mode or a multicast mode, in which the Push message carries an indication of returning a receiving response; and
a response returning unit 52, configured to return a receiving response to the Push server or set up a connection to the Push server according to the indication of returning the receiving response.

The receiving unit 51 of the terminal receives the Push message, and judges whether the Push message carries an indication of returning a receiving response, and returns a receiving response to the Push server if the Push message carries the indication. The types of the receiving response include: receiving success response, receiving failure response, receiving rejection response, pending response, and re-delivery-disabled response. The Push server makes statistics on the delivery reports of the Push message according to the receiving responses returned by the terminals, or the connection set up between the server and the terminals, so that the Push server can know the delivery state of the Push message even if the Push message is delivered in a broadcast mode or a multicast mode.

If the Push message is delivered to the terminals in a broadcast mode or a multicast mode, and the Push message carries an indication of returning a receiving response, but the terminals have no uplink channel for returning the receiving response, the Push server may add an indication of a bearer mode into the Push message delivered to the terminals, so that the terminal activates a corresponding application according to the indication of the bearer mode, and returns a receiving response to the Push server in the indicated bearer mode. In this way, it is ensured that the terminals return receiving responses even if no uplink channel is available to the terminal. Accordingly, referring to FIG. 6, the terminal according to the embodiment of the present invention further includes:
an application activating unit 53, configured to activate the corresponding application according to the bearer mode indicated in the Push message. In this case, the response returning unit 52 is specifically configured to return a receiving response to the Push server in the indicated bearer mode.

The terminal according to the embodiment of the present invention is applicable to the second method embodiment above, so that the Push server can know the delivery state of the Push message even if the Push message is delivered in a broadcast mode or a multicast mode.

### Embodiment 5

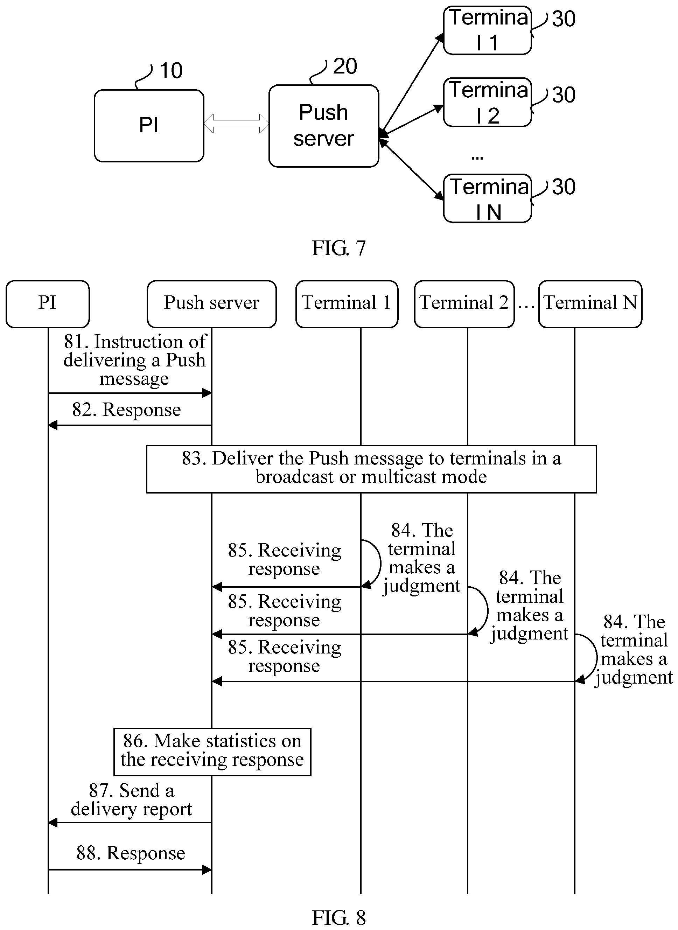

Referring to FIG. 7, a system for delivering a Push message according to the embodiment of the present invention includes a PI 10, a Push server, and several terminals 30.

The Push server 20 is configured to receive an instruction of delivering a Push message sent by the PI, in which the Push message that carries an indication of making statistics on the delivery result, determine to deliver the Push message to the terminals in a broadcast mode or a multicast mode according to the Push message, and obtain a delivery report according to the indication of making statistics on the delivery result.

Specifically, the Push server 20 is configured to obtain the delivery report by querying a group management server, or by receiving receiving responses returned by the terminals, or by querying a number of connections set up between the terminals and the server. The obtaining the delivery report includes: obtaining delivery reports of all delivery result types, or obtaining delivery reports of only the indicated delivery result type.

The Push server 20 is further configured to return the delivery report to the PI proactively, or return the delivery report to the PI according to a massage for requesting the delivery report sent by the PI, or determine whether to return a response that carries the requested delivery report according to a returning policy if a server other than the PI requests to return the delivery request. The returning the delivery report includes: returning delivery reports of all delivery result types, or returning delivery reports of only the requested delivery result type.

If the terminals have no uplink channel available for returning the receiving response, the Push server 20 is further configured to add an indication of a bearer mode into the Push message delivered to the terminals, so that the terminal activates a corresponding application according to the indication of the bearer mode and returns a receiving response in the indicated bearer mode.

To enhance the statistical function of the Push server 20, the PI 10 adds an indication of a statistical mode into the Push message. In this case, the Push server is further configured to make statistics on the delivery report in the statistical mode indicated in the Push message, and return the statistical result to the PI by extending the message header field, value range, or message body of the delivery report.

FIG. 8 is a specific flow chart of implementing a method embodiment according to the present invention. The method includes the following steps.

Step 81: By sending an instruction of delivering a Push message to the Push server, the PI instructs the Push server to deliver the Push message in a broadcast mode or a multicast mode.

The Push message carries an indication of making statistics on delivery reports, or an indication of a bearer mode of the terminal, or an indication of a statistical mode.

Step 82: The Push server returns a response message. This step is optional.

Step 83: The Push server delivers the Push message to terminals in a broadcast mode or a multicast mode.

Step 84: The terminal determines whether to return a receiving response after receiving the Push message, and optionally, judges whether the Push message indicates a bearer mode. If multiple bearer modes are indicated, the terminal activates the corresponding application according to the network conditions, user's favorites, setting and capability information, and selects a bearer mode for returning a receiving response.

Step 85: The terminals return receiving responses to the Push server in the indicated bearer mode or a default bearer mode.

Step 86: After receiving the receiving responses returned by the terminals, the Push server buffers the receiving response and makes classification and statistics, for example, makes statistics on the number of successfully sent Push messages and the number of unsuccessfully sent Push messages. If the Push message further carries an indication of statistical mode, the Push server makes statistics on the receiving responses returned by the terminals in the indicated statistical mode.

Step 87: The Push server sends a delivery report to the PI according to the statistical result. Because the terminals may receive the Push message at different time or return the receiving response at different time, the terminals may return delivery reports in batches, or receive all statistical results and return all delivery reports together, or send the delivery reports within a set time limit. The delivery report needs to specify the identifier of the Push message, so that the PI can result. Because the terminals may receive the Push message at different time or return the receiving response at different time, the terminals may return delivery reports in batches, or receive all statistical results and return all delivery reports together, or send the delivery reports within a set time limit. The delivery report needs to specify the identifier of the Push message, so that the PI can identify the delivery report corresponding to which Push message according to the identifier.

Step 88: The PI returns a response message to the Push server after receiving the delivery report.

In this process, before the Push server returns a delivery report to the PI, the PI may add a query request additionally in any step to request the delivery state of the Push message.

Persons of ordinary skill in the art can further understand that, the units and the steps described herein may be implemented by electronic hardware, computer software, or a combination thereof. In order to illustrate the interchangeability of the hardware and the software, the composition and steps of the embodiments of the present invention are generically described according to functions in the above description. Whether the functions are implemented through hardware or software depends on the specific application of the technical solution and the constraint conditions of the design. Persons of ordinary skill in the art can use different methods to implement the described functions for each specific application, and such implementation shall not be construed as falling outside the scope of the embodiments of the present invention in any way.

The steps of the method described herein may be implemented through hardware and/or a software module executed by a processor. The software module may be located in a Random-access Memory (RAM), computer memory, Read-only Memory (ROM), electrically programmable ROM, electrically erasable programmable ROM, register, hard disk, moveable disk, CD-ROM, or any other storage media.

## Claims

1. A method for delivering a Push message, comprising:
receiving (11), by a push server, a Push message from a Push Initiator, PI, wherein the Push message carries an indication of making statistics on a delivery result;
determining, by the push server, to deliver (12) the Push message to terminals in a broadcast mode or a multicast mode according to the Push message; and
obtaining (13), by the push server, a delivery report carrying a statistical delivery result by receiving receiving responses returned by the terminals and obtaining a statistical delivery result according to the received receiving responses, or by querying a number of connections set up between the terminals and the server, so as to know delivery state of the Push message;
wherein if the terminals have no uplink channel available for returning the receiving response, the method further comprises:
adding, by the push server, an indication of a bearer mode into the Push message delivered to the terminals, so that the terminal activates a corresponding application according to the indication of the bearer mode and returns a receiving response in the indicated bearer mode.

2. The method for delivering a Push message according to claim 1, further comprising:
returning, by the push server, the delivery report to the PI proactively; or
returning, by the push server, the delivery report to the PI according to a message for requesting the delivery report sent by the PI; or
determining, by the push server, whether to return a requested delivery report according to a returning policy if a server other than the PI sends a message for requesting the delivery report.

3. The method for delivering a Push message according to claim 1, wherein:
the obtaining, by the push server, a delivery report by querying a group management server, or by receiving receiving responses returned by the terminals, or by querying a number of connections set up between the terminals and the server comprises: obtaining, by the push server, delivery reports of all delivery result types, or obtaining delivery reports of only an indicated delivery result type.

4. The method for delivering a Push message according to claim 2, wherein the Push message further carries an indication of a statistical mode, and the method further comprises:
making statistics, by the push server, on the delivery report in the indicated statistical mode, and returning a statistical result to the PI by extending a message header field, a value range, or a message body of the delivery report.

5. The method for delivering a Push message according to claim 1, wherein if the Push message carries an indication of returning a receiving response but the terminal returns no receiving response or returns a delivery failure response, according to address information of the terminal, the Push message is redelivered to the terminals.

6. The method for delivering a Push message according to any one of claims 1-5, wherein the indication of making statistics on the delivery result is information for requesting a result notification, carried in the Push message sent by the PI.

7. A Push server (3), comprising:
a receiving unit (31), configured to receive a Push message from a Push Initiator, PI, wherein the Push message carries an indication of making statistics on a delivery result;
a delivery mode determination unit (32), configured to determine to deliver the Push message to terminals in a broadcast mode or a multicast mode according to the Push message; and
a delivery report obtaining unit (33), configured to obtain a delivery report carrying a statistical delivery result by receiving receiving responses returned by the terminals and obtaining a statistical delivery result according to the received receiving responses, or by querying a number of connections set up between the terminals and the server, so as to know delivery state of the Push message;
wherein the Push server (3) further comprising:
a bearer mode indication unit (35), configured to add an indication of a bearer mode into the Push message delivered to the terminals, if the terminals have no uplink channel available for returning the receiving response; wherein the indication of the bearer mode is used to make the terminals activate a corresponding application according to the indication of the bearer mode and return a receiving response in the indicated bearer mode.

8. The Push server according to claim 7, further comprising a delivery report returning unit (34), wherein the delivery report returning unit (34) at least comprises one of the following modules:
a proactive returning module, configured to return the delivery report to the PI proactively;
a request-based returning module, configured to return the delivery report to the PI according to a massage for requesting the delivery report sent by the PI; and
a policy-based returning module, configured to determine whether to return a requested delivery report according to a returning policy if a server other than the PI sends a message for requesting the delivery report.

9. The Push server according to claim 8, further comprising:
a statistical unit (36), configured to make statistics on obtained delivery reports in a statistical mode indicated in the Push message;
wherein the delivery report returning unit (34) is specifically configured to return a statistical result to the PI by extending a message header field, a value range, or a message body of the delivery report.

10. The Push server according to claim 8, further comprising:
a re-delivery unit (37), configured to re-deliver the Push message to the terminal according to address information of the terminal if the Push message carries an indication of returning a receiving response but the terminal returns no receiving response or returns a delivery failure response.

## Patentansprüche

1. Verfahren zum Zustellen einer "Push"-Nachricht, umfassend:
Empfangen (11) einer "Push"-Nachricht von einem "Push-Initiator", PI, durch einen "Push"-Server, wobei die "Push"-Nachricht eine Angabe über das Erstellen von Statistiken über ein Zustellungsergebnis enthält;
Bestimmen durch den "Push"-Server, die "Push"-Nachricht an Endgeräte in einem "Broadcast"-Modus oder in einem "Multicast"-Modus gemäß der "Push"-Nachricht zuzustellen (12); und
Empfangen (13) eines Zustellungsberichts, der ein statistisches Zustellungsergebnis enthält, durch den "Push"-Server, durch das Empfangen von Empfangsantworten, die von den Endgeräten zurückgesendet werden, und durch das Erhalten eines statistischen Zustellungsergebnisses gemäß den empfangenen Empfangsantworten, oder durch Abfragen einer Reihe von Verbindungen, die zwischen den Endgeräten und dem Server eingerichtet sind, um den Zustellungsstatus der "Push"-Nachricht zu erfahren;
wobei, falls den Endgeräten kein "Uplink"-Kanal für das Zurücksenden der Empfangsantwort zur Verfügung steht, das Verfahren ferner Folgendes umfasst:
Hinzufügen einer Angabe eines Trägermodus in die an die Endgeräte zugestellte "Push"-Nachricht durch den "Push"-Server, so dass das Endgerät eine entsprechende Anwendung gemäß der Angabe des Trägermodus aktiviert und eine Empfangsantwort in dem angegebenen Trägermodus zurücksendet.

2. Verfahren zum Zustellen einer "Push"-Nachricht nach Anspruch 1, ferner umfassend:
proaktives Rücksenden des Zustellungsberichts an den PI durch den "Push"-Server; oder
Rücksenden des Zustellungsberichts an den PI durch den "Push"-Server gemäß einer Nachricht zur Anforderung des von dem PI gesendeten Zustellungsberichts; oder
Ermitteln durch den "Push"-Server, ob ein angeforderter Zustellungsbericht gemäß Rücksendegrundsätzen zurückzusenden ist, falls ein anderer Server als der PI eine Nachricht zum Anfordern des Zustellungberichts sendet.

3. Verfahren zum Senden einer "Push"-Nachricht nach Anspruch 1, wobei das Empfangen eines Zustellungsberichts durch den "Push"-Server durch Abfrage eines Gruppenverwaltungsservers oder durch Empfangen von Empfangsantworten, die von den Endgeräten zurückgesendet werden, oder durch Abfrage einer Reihe von Verbindungen, die zwischen den Endgeräten und dem Server eingerichtet sind, umfasst: Empfangen von Zustellungsberichten aller Arten von Zustellungsergebnissen durch den "Push"-Server oder Empfangen von Zustellungsberichten nur einer angegebenen Art von Zustellungsergebnissen.

4. Verfahren zum Zustellen einer "Push"-Nachricht nach Anspruch 2, wobei die "Push"-Nachricht ferner eine Angabe über einen statistischen Modus enthält und das Verfahren ferner Folgendes umfasst:
Erstellen von Statistiken durch den "Push"-Server über den Zustellungsbericht in dem angegebenen statistischen Modus und Zurücksenden eines statistischen Ergebnisses an den PI durch Erweiterung eines Nachrichtenkopffeldes, eines Wertebereichs oder eines Nachrichtenkörpers des Zustellungsberichts.

5. Verfahren zum Zustellen einer "Push"-Nachricht nach Anspruch 1, wobei, falls die "Push"-Nachricht eine Angabe zum Rücksenden einer Empfangsantwort enthält, aber das Endgerät keine Empfangsantwort zurücksendet oder eine Zustellungsfehlerantwort gemäß den Adressinformationen des Endgeräts zurücksendet, die "Push"-Nachricht erneut an die Endgeräte zugestellt wird.

6. Verfahren zum Zustellen einer "Push"-Nachricht nach einem der Ansprüche 1-5, wobei die Angabe zum Erstellen von Statistiken über das Zustellungsergebnis Informationen zur Anforderung einer Ergebnismitteilung sind, die in der von dem PI gesendeten "Push"-Nachricht enthalten ist.

7. "Push"-Server (3), umfassend:
eine Empfangseinheit (31), die konfiguriert ist zum Empfangen einer "Push"-Nachricht von einem "Push-Initiator", PI, wobei die "Push"-Nachricht eine Angabe über das Erstellen von Statistiken über ein Zustellungsergebnis enthält;
eine Einheit zur Ermittlung des Zustellungsmodus (32), die konfiguriert ist zum Bestimmen der Zustellung der "Push"-Nachricht an Endgeräte in einem "Broadcast"-Modus oder in einem ist "Multicast"-Modus gemäß der "Push"-Nachricht; und
eine Einheit zum Empfangen eines Zustellungsberichts (33), die konfiguriert zum Empfangen eines Zustellungsberichts, der ein statistisches Zustellungsergebnis enthält, durch den "Push"-Server, durch das Empfangen von Empfangsantworten, die von den Endgeräten zurückgesendet werden, und durch das Erhalten eines statistischen Zustellungsergebnisses gemäß den empfangenen Empfangsantworten, oder durch Abfragen einer Reihe von Verbindungen, die zwischen den Endgeräten und dem Server eingerichtet sind, um den Zustellungsstatus der "Push"-Nachricht zu erfahren;
wobei der "Push"-Server (3) ferner Folgendes umfasst:
eine Einheit zur Angabe des Trägermodus (35), die konfiguriert ist zum Hinzufügen einer Angabe eines Trägermodus in die den Endgeräten zugestellte "Push"-Nachricht, falls den Endgeräten kein "Uplink"-Kanal zum Zurücksenden der Empfangsantwort zur Verfügung steht; wobei die Angabe des Trägermodus verwendet wird, damit die Endgeräte eine entsprechende Anwendung gemäß der Angabe des Trägermodus aktivieren und eine Empfangsantwort in dem angegebenen Trägermodus zurücksenden.

8. "Push"-Server nach Anspruch 7, ferner umfassend eine Einheit zum Zurücksenden eines Zustellungsberichts (34), wobei die Einheit zum Zurücksenden eines Zustellungsberichts (34) mindestens eines der folgenden Module aufweist:
ein proaktives Rücksendemodul, das konfiguriert ist zum proaktiven Zurücksenden des Zustellungsberichts an den PI;
ein anforderungsbasiertes Rücksendemodul, das konfiguriert ist zum Zurücksenden des Zustellungsberichts an den PI gemäß einer Nachricht zur Anforderung des von dem PI gesendeten Zustellungsberichts; und
ein "policy"-basiertes Rücksendemodul, das konfiguriert ist zum Ermitteln, ob ein angeforderter Zustellungsbericht gemäß einer Rücksendemethode zurückzusenden ist, falls ein anderer Server als der PI eine Nachricht zum Anfordern des Zustellungsberichts sendet.

9. "Push"-Server nach Anspruch 8, ferner umfassend:
eine statistische Einheit (36), die konfiguriert ist zum Erstellen von Statistiken über erhaltene Zustellungsberichte in einem in der "Push"-Nachricht angegebenen statistischen Modus;
wobei die Einheit zum Rücksenden des Zustellungsberichts (34) insbesondere konfiguriert ist zum Zurücksenden eines statistischen Ergebnisses an den PI durch Erweiterung eines Nachrichtenkopffeldes, eines Wertebereichs oder eines Nachrichtenkörpers des Zustellungsberichts.

10. "Push"-Server nach Anspruch 8, ferner umfassend:
eine Einheit zur erneuten Zustellung (37), die konfiguriert ist zum erneuten Zustellen der "Push"-Nachricht an das Endgerät gemäß Adressinformationen des Endgeräts, falls die "Push"-Nachricht eine Angabe zum Zurücksenden einer Empfangsantwort enthält, das Endgerät jedoch keine Empfangsantwort zurücksendet oder eine Zustellungsfehlerantwort zurücksendet.

## Revendications

1. Procédé de livraison d'un message poussé, comprenant :
la réception (11), par un serveur pousseur, d'un message poussé depuis un lanceur de poussée, PI, le message poussé portant une indication d'exécution de statistiques sur un résultat de livraison ;
la détermination, par le serveur pousseur, qu'il convient de livrer (12) le message poussé à des terminaux dans un mode de diffusion ou un mode de multidiffusion conformément au message poussé ; et
l'obtention (13), par le serveur pousseur, d'un rapport de livraison comportant un résultat de livraison statistique en recevant des réponses de réception renvoyées par les terminaux et en obtenant un résultat de livraison statistique conformément aux réponses de réception reçues, ou en interrogeant un nombre de connexions établies entre les terminaux et le serveur, de manière à connaître l'état de livraison du message poussé ;
le procédé comprenant en outre, si les terminaux ne disposent pas de canal de liaison montante pour renvoyer la réponse de réception,
l'ajout, par le serveur pousseur, d'une indication d'un mode porteur dans le message poussé livré aux terminaux, de telle sorte que le terminal active une application correspondante conformément à l'indication du mode porteur et renvoie une réponse de réception dans le mode porteur indiqué.

2. Procédé de livraison d'un message poussé selon la revendication 1, comprenant en outre :
le renvoi, par le serveur pousseur, du rapport de livraison au lanceur PI de manière proactive ; ou
le renvoi, par le serveur pousseur, du rapport de livraison au lanceur PI conformément à un message de demande du rapport de livraison envoyé par le lanceur PI ; ou
la détermination, par le serveur pousseur, qu'il convient ou non de renvoyer un rapport de livraison demandé conformément à une stratégie de renvoi si un serveur autre que le lanceur PI envoie un message de demande du rapport de livraison.

3. Procédé de livraison d'un message poussé selon la revendication 1, dans lequel :
l'obtention, par le serveur pousseur, d'un rapport de livraison en interrogeant un serveur de gestion de groupe, ou en recevant des réponses de réception renvoyées par les terminaux, ou en interrogeant un nombre de connexions établies entre les terminaux et le serveur comprend : l'obtention, par le serveur pousseur, de rapports de livraison de tous les types de résultats de livraison, ou l'obtention de rapports de livraison d'un seul type de résultat de livraison indiqué.

4. Procédé de livraison d'un message poussé selon la revendication 2, dans lequel le message poussé comporte en outre une indication d'un mode statistique, et le procédé comprenant en outre :
l'exécution de statistiques, par le serveur pousseur, sur le rapport de livraison dans le mode statistique indiqué, et le renvoi d'un résultat statistique au lanceur PI en envoyant un champ d'en-tête de message, une plage de valeurs, ou un corps de message du rapport de livraison.

5. Procédé de livraison d'un message poussé selon la revendication 1, dans lequel si le message poussé comporte une indication de renvoi d'une réponse de réception mais que le terminal ne renvoie pas de réponse de réception ou renvoie une réponse d'échec de livraison, conformément aux informations d'adresse du terminal, le message poussé est livré de nouveau aux terminaux.

6. Procédé de livraison d'un message poussé selon l'une quelconque des revendications 1 à 5, dans lequel l'indication d'exécution de statistiques sur le résultat de livraison est une information de demande d'une notification de résultat, incluse dans le message poussé envoyé par le lanceur PI.

7. Serveur pousseur (3), comprenant :
une unité de réception (31), configurée pour recevoir un message poussé depuis un lanceur de poussée, PI, le message poussé portant une indication d'exécution de statistiques sur un résultat de livraison ;
une unité de détermination de mode de livraison (32), configurée pour déterminer qu'il convient de délivrer le message poussé à des terminaux dans un mode de diffusion ou un mode de multidiffusion conformément au message poussé ; et
une unité d'obtention de rapport de livraison (33), configurée pour obtenir un rapport de livraison comportant un résultat de livraison statistique en recevant des réponses de réception renvoyées par les terminaux et en obtenant un résultat de livraison statistique conformément aux réponses de réception reçues, ou en interrogeant un nombre de connexions établies entre les terminaux et le serveur, de manière à connaître l'état de livraison du message poussé ;
le serveur pousseur (3) comprenant en outre :
une unité d'indication de mode porteur (35), configurée pour ajouter une indication d'un mode porteur dans le message poussé livré aux terminaux, si les terminaux ne disposent pas de canal de liaison montante pour renvoyer la réponse de réception ;
dans lequel l'indication du mode porteur est utilisée pour faire en sorte que les terminaux activent une application correspondante conformément à l'indication du mode porteur et renvoient une réponse de réception dans le mode porteur indiqué.

8. Serveur pousseur selon la revendication 7, comprenant en outre une unité de renvoi de rapport de livraison (34), dans lequel l'unité de renvoi de rapport de livraison (34) comprend au moins l'un des modules suivants :
un module de renvoi proactif, configuré pour renvoyer le rapport de livraison au lanceur PI de manière proactive ;
un module de renvoi sur demande, configuré pour renvoyer le rapport de livraison au lanceur PI conformément à un message de demande du rapport de livraison envoyé par le lanceur PI ; et
un module de renvoi selon une stratégie, configuré pour déterminer qu'il convient ou non de renvoyer un rapport de livraison demandé conformément à une stratégie de renvoi si un serveur autre que le lanceur PI envoie un message de demande du rapport de livraison.

9. Serveur pousseur selon la revendication 8, comprenant en outre :
une unité statistique (36), configurée pour exécuter des statistiques sur des rapports de livraison obtenus dans un mode statistique indiqué dans le message poussé ;
dans lequel l'unité de renvoi de rapport de livraison (34) est configurée spécifiquement pour renvoyer un résultat statistique au lanceur PI en envoyant un champ d'en-tête de message, une plage de valeurs, ou un corps de message du rapport de livraison.

10. Serveur pousseur selon la revendication 8, comprenant en outre :
une unité de livraison à nouveau (37), configurée pour livrer à nouveau le message poussé au terminal conformément aux informations d'adresse du terminal si le message poussé comporte une indication de renvoi d'une réponse de réception mais que le terminal ne renvoie pas de réponse de réception ou renvoie une réponse d'échec de livraison.
